# EUROPEAN PATENT APPLICATION

(11) **EP 1 993 045 A1**
(43) Date of publication of application: **19.11.2008**
(21) Application number: 07251343.5
(22) Date of filing: 28.03.2007
(51) Int. Cl.: G06F 17/30

(54) **Electronic document retrievel system**

(71) Applicant: British Telecommunications Public Limited Company, London EC1A 7AJ (GB)
(72) Inventor: The designation of the inventor has not yet been filed
(74) Representative: Nash, Roger William

(57) **Abstract**

An electronic document retrieval system is disclosed. It has particular utility to WorldWide Web searching. In contrast to conventional search engines, when providing supplementary results in addition to primary results, the system enables the supplementary results to include links to documents in web-sites other than the web-site to which the primary result belongs. In this way, a user is able to find the page most relevant to his query more rapidly than has hitherto been possible.

## Description

The present invention relates to an electronic document retrieval system and method. It has particular utility in identifying and retrieving information from the World-Wide Web which relates to a query input by a user.

At the time of writing it is estimated that the World-Wide Web includes tens of billions of pages. Search engines such as Google and Yahoo have developed sophisticated algorithms in order to be able to identify the very small proportion of those pages which are relevant to a user query.

In general, today's search engines work by creating a full-text index of the content of web-pages. The search engine's crawler will visit a web-page, find key terms in that web-page, and then generate a list which gives, for each set of key terms, a list of web-pages which include or relate to those key terms. The crawler then 'crawls' the links on the page and carries out a similar process with each of the linked pages. It will be realised that if such an index is to point to even a small fraction of the pages included in the World-Wide Web, it will nevertheless be an exceptionally large index.

The index is then used to find web-pages which relate to the key terms found in a user's query. There are of course potentially a very large number of web-pages which include the key-terms. Today's search engines order the lists in which these 'hits' are presented by counting how many other pages include a link to each page in the list.

Search engine providers must deal with the competing requirements of web-site owners and users. Search engines try to ensure that web-site owners cannot achieve a higher ranking for their web-page in response to a user query than that page deserves given its quality and relevancy to the query.

Web-site owners currently have little control over how any 'hits' linking to pages on their web-site are displayed. Web-site owners can influence which pages on their site are included in the search engine's index, by presenting the search engine's crawler program with a 'Sitemap' which indicates a ranking of the most important pages on the web-site. It is generally accepted that the World-Wide Web is too large for crawlers to visit (and therefore include in the global index) every page on each web-site. Hence, web-site owners can use Sitemaps to influence which pages on their web-site are likely to be included in a search engine's list of results (though Sitemaps will not influence where in that list the 'hit' appears).

A more recent development is the introduction by Google of Sitelinks'. These are further links included below the main link and represent key pages on the web-site owner's site. According to Google's Webmaster Help Center, the key pages are identified by the crawler by analysing the link structure of the web-site.

International patent application WO 07/001974 assigned to Google Inc discloses other ways in which the 'Sitelinks' feature might be provided. According to the proposals put forward in the patent application, Google's computers aggregate information about which web-pages a user browses - that information being sent by the computer running programs like the 'Google Toolbar' (provided in that case the user allows the information to be sent). By aggregating this information, Google would be able to build up data which shows which pages on a given web-site are most visited by users, and links to those pages might supplement one or more 'hits' on the search results page. In an alternative embodiment, it is suggested that web-site providers might provide the search engine system with a list of favoured web-pages within their own web-site.

The size of the World-Wide Web is made more manageable by the use of a hierarchical naming convention for World-Wide Web documents. The upper levels of this hierarchy form part of the domain name system. The familiar top-level domains - e.g. '.com', '.org' or '.uk' are arranged in sub-domains - e.g. - '.org.uk' with domain names below that - for example 'www.bt.com'. The Domain Name System is responsible for converting domain names to IP addresses. Normally, web-sites addressed via a domain name are themselves organised as a hierarchy of files similar to the file system supported by most operating system programs. For example, the web-site www.bt.com might have separate sections relating to purchasing products and billing-related services - e.g. www.bt.com/e-shop and www.bt.com/billing respectively.

In practice it appears that supplementary results are provided only in response to a query which enters a brand or business name (current examples for Google are 'grohe' or 'dyson') in the global search engine. In each case, the first search result returned is the main page of the business' web-site, and each of the sub-links provided directly beneath lead to pages within the web-site.

The present inventors have realised that the above proposals provide sub-links which are unnecessarily constrained in where they lead and this slows down information retrieval from the World-Wide Web.

According to a first aspect of the present invention, there is provided an electronic information retrieval system comprising:
a plurality of collection-hosting computers operable to provide information from respective stored collections of hyperlinked documents, a global search engine computer, a user's computer having a user input device and a display, said information retrieval system further comprising a network interconnecting said search engine computer, said one or more collection-hosting computers and said user's computer; each of said computers including software allowing data transfer between said computers;
said search engine computer is arranged in operation to:
   i) obtain related link data from each of said plurality of host computers, wherein said related link data includes one or more external links to documents outside the collection hosted by said collection-hosting computers;
   ii) receive a search query from said user's computer and to select one or more globally-selected documents found to be relevant to the query;
   iii) identify the relevant document collection to which said globally-selected document belongs;
   iv) identify one or more external documents outside the relevant collection in dependence on said related link data;
   v) send to said user's computer a search result including a hyperlink to said globally-selected document along with one or more hyperlinks to said one or more relevant external documents; and
said user's computer is arranged in operation to:
   i) allow said user to enter said search query using said input device to seek relevant documents from said plural collections of documents; and
   ii) display said search result on the user's computer's display.

By arranging a collection-hosting computer to provide a global search engine with links to related external documents (i.e. documents outside the collection but nevertheless related to the collection) and then arranging the global search engine computer, having found a relevant document from the available plurality of collections, to find the collection to which the relevant document belongs, extract the external documents related to that collection, and display links to those external documents alongside the link to the relevant document in the search results, a user is able to take advantage of the combination of the access to the plurality of collections enjoyed by the search engine, and the relevant external links provided by the collection-hosting computer to reach a relevant document directly (with a single click) from the search results displayed on his screen, even though the search engine's main result includes a link to the wrong collection. In this way, the user is provided with a tool which enables more rapid retrieval of relevant information from a plurality of collections of documents than has hitherto been possible.

It is to be understood that the word global is used in the sense of 'relating to a plurality of electronic document collections' and is not always to be understood to mean that the search engine enables the finding of documents from computers situated all around the globe. Nevertheless, the present invention is particularly advantageous where number of collections is of the magnitude seen in the World-Wide Web.

In preferred embodiments, the related link data comprises a category index indicating associations between keywords and/or key phrases, and category-heading documents outside (and possibly also inside) said collection, said search engine computer being further arranged in operation to identify one or more relevant external category-heading documents in dependence on words or phrases in said query and the category index associated with said collection.

The use of local keyword / category information provided by document collection administrators in combination with information kept by global search engines usefully combines the domain-specific expertise of local administrators with the scale and independence of global search engines.

The system is of particularly utility in embodiments where wherein said documents comprise World-Wide Web pages, and said collections comprise web-sites. It is particularly advantageous when applied to the World-Wide Web since the providing of links to relevant local web-pages means that users are able to quickly find the information they seek despite the World-Wide Web's enormous scale.

In some embodiments, said collection of documents is organised in a hierarchy, and said category-heading pages comprise section-heading pages which, in the hierarchy, are above other pages within the section.

Preferably, each of said collection-hosting computers is further arranged in operation to select keywords for inclusion in said category index in dependence upon the specificity of keywords to the category headed by said category-heading documents in said collection. Those words which are found to be specific to the category in questions are selected as keywords. In refinements of such embodiments, words which are unique to the category in question are discounted as keywords (they are in some sense too specific).

In still better embodiments, each of said collection-hosting computers is further arranged in operation to select keywords for inclusion in said category index in dependence the popularity of use of the keyword in user queries. Those keywords which are found to be very popular without being extremely popular, and also to be specific to the category in question, are selected as keywords.

In preferred embodiments, each collection-hosting computer stores said category index data and document categorisation data which associates one or more local documents with local category-heading pages;
said search engine computer is further arranged in operation to:
vi) respond to the user clicking on one of said category-heading document links in said search result page by forwarding to the relevant collection-hosting computer a categorised search query comprising an indication of which category-heading page link was selected by the user and the user's original search query;
said collection-hosting computer being further arranged in operation to receive said categorised search query from said search engine computer and to select a local document accordingly, and to return the selected local document to the user.

These preferred embodiments have the advantage that the search engine computer returns to the user a link which might well lead directly to the information which the user is seeking - the choice of that link for display to the user being informed both by the general scale of the global search engine and the domain-specific accuracy of the local search engine.

There is now provided, by way of example only, a description of specific embodiments of the present invention. The description is given with reference to the accompanying drawings in which:
Figure 1 shows the hardware used in the global search engine system according to a first embodiment;
Figure 2 shows an abbreviated site-specific index provided by a web-site provider to the global search engine provider;
Figures 3A and 3B are graphs showing keywords' membership of fuzzy sets relating to keyword specificity and frequency of keyword occurrence in queries;
Figure 4 shows the site-specific index building process carried out by each web-server computer;
Figure 5 shows processing carried out by the search engine provider when generating global and site-specific index information;
Figure 6 shows processing carried out by the search engine provider in response to a user search query;
Figure 7 shows an example of a search result page that might be returned to the user;
Figure 8 shows further processing carried out by the web-site server in response to the user selecting one of the site-specific links seen on the search result page.

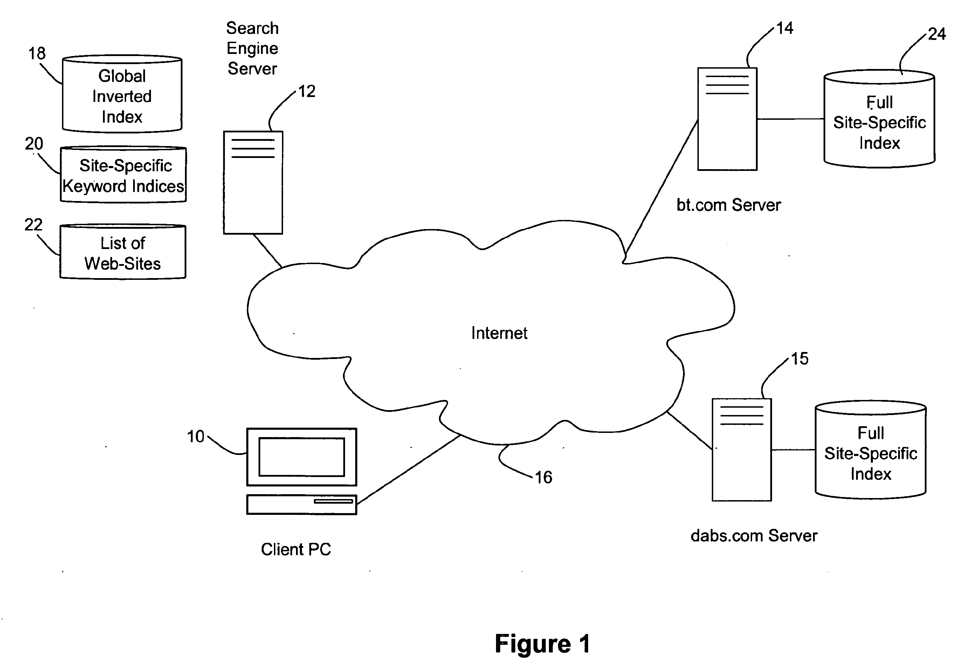

Figure 1 shows a client PC 10, search engine server 12 and web-site servers 14, 15 connected to one another by the Internet 16. Those skilled in the art will know that the actual World-Wide Web has tens of millions of web server computers like web-site servers 14,15 serving more than ten billion 'indexable' web-pages between them. The number of PCs like client PC 10 connected to the Internet is estimated to be several hundreds of millions. To generate and store a global index which covers a reasonable fraction of the world-wide web therefore requires server farms rather than the single search engine server seen in Figure 1. It is estimated, for example, that Google's services are provided using nearly half-a-million computers.

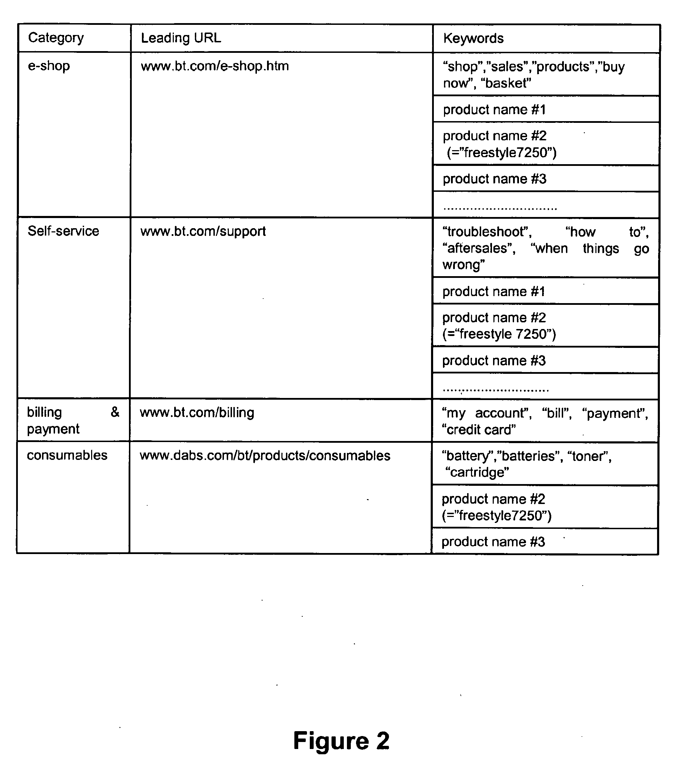

The search engine server 12 has access to a first permanent storage device 18 which stores a full-text inverted index of hundreds of millions of web-pages - a global index. That index is conventional and will not be described further here. The search engine server 12 further has access to a second permanent storage device 20 which stores a plurality of site-specific indices (the composition of which will be described with reference to Figure 2 below), and a third permanent storage device 22 which stores a list of the URLs of the home page of many web-sites accessible via the Internet 16.

The bt.com web-site server 14 has access to a fourth permanent storage device 24 which stores a full site-specific index for the web-site. The dabs.com web-site server 15 has a similar full site-specific index.

Those skilled in the art will be fully aware of the hardware included in modern computers, so no description of the hardware components of the web server computers and client PCs which make up the World-Wide Web will be given here.

Using a process which will be described below, the webmaster of each web-site computer generates a site-specific keyword / category index. The site-specific index (Figure 2) presents records for each of a plurality of webmaster-defined categories of web-pages. Each record includes a name for the category (leftmost column), the Uniform Resource Locator (URL) for the web-site's main page in that category (second column), a list of keywords associated with that category (third column).

It is to be noted that the leading page entry in a record might even refer to a page on a different web-site - e.g. one served by dabs.com web-server 15. As will be explained below, this can allow a user whose query, when handled by a global search engine which lacks web-site specific knowledge, to be presented with a link to a web-site held at a different network address to the web-site which generated the site-specific index. Thus, in some sense, the user's browsing can be re-directed in the right direction even when his query in combination with the global search engine has not led him immediately to the web-site which contains the information he requires.

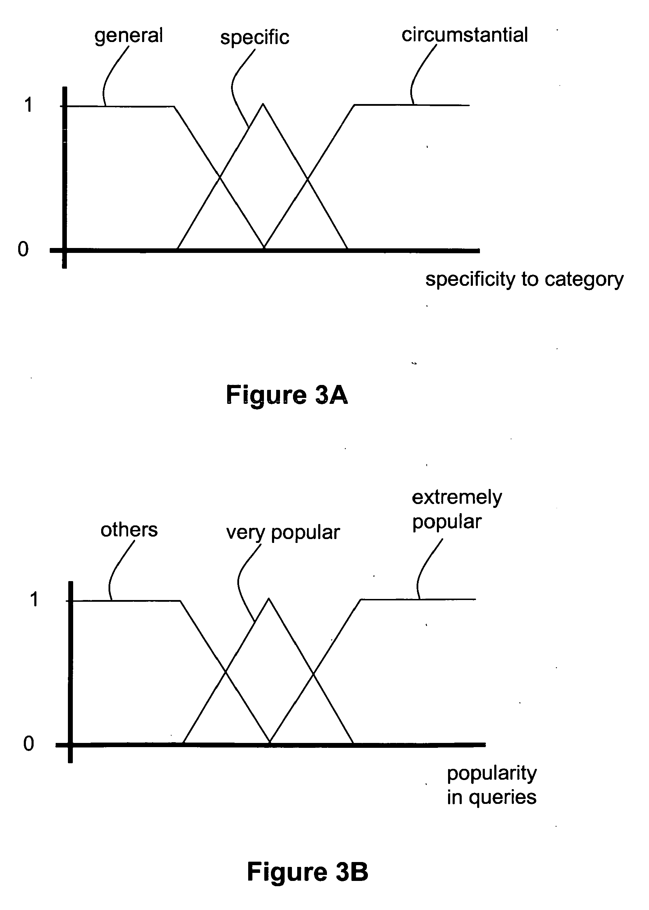

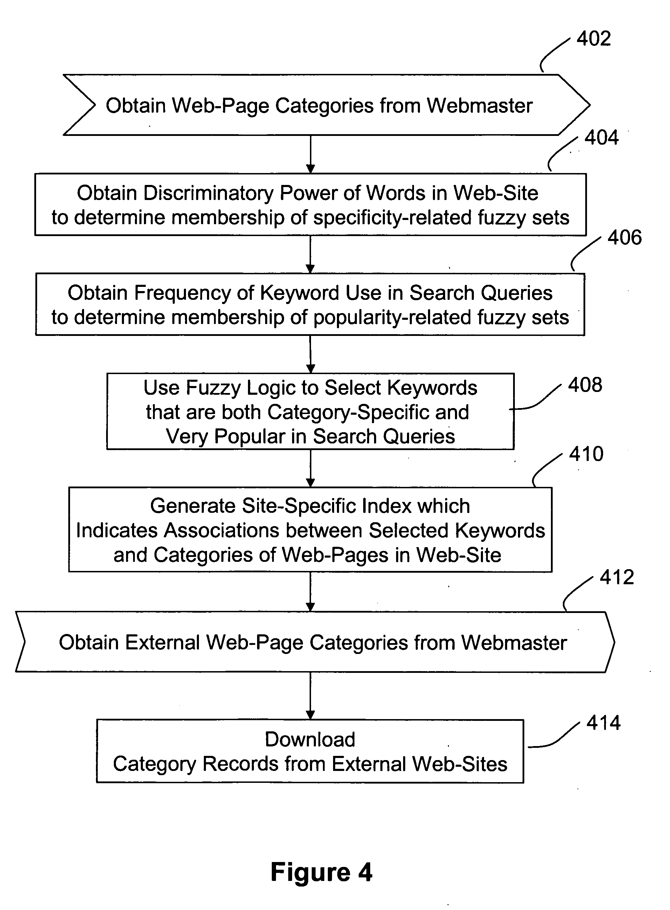

Figure 3A is a graph showing the degree to which keywords might belong to the fuzzy sets 'general', 'specific' and 'circumstantial'. Since the concepts of 'general', 'specific' and 'circumstantial' are not clearly defined, it is useful to use fuzzy sets to represent whether a keyword is 'general', 'specific' or 'circumstantial'. How a keyword's degree of membership to the three sets is determined will be explained with reference to Figure 4 below.

Figure 3B is a graph showing the degree to which keywords might belong to the fuzzy sets 'less than very popular', 'very popular' and 'extremely popular'. How a keyword's degree of membership of the three sets is determined will be explained with reference to Figure 4 below.

The webmaster of each web-server installs a program which helps to build the site-specific index of Figure 2 using the process shown in Figure 4. The local index building process (Figure 4) begins with the presentation of a user-interface on the display of a screen associated with the web-server 14 which prompts (step 402) the webmaster to identify different categories into which the webmaster believes the pages of the web-site might usefully be grouped. The webmaster indicates which web-pages in the web-site belong to which categories.

The program then visits the listed pages in each category-site, and using, for example, the well-known term-frequency / inverse document frequency measure, calculates how specific words included in those pages are to each category. The results of this calculation are then used (step 404) to determine the degree to which each word belongs to the fuzzy sets 'general', 'specific' and 'circumstantial' for each category. It will be understood by those skilled in the art that the limits of each fuzzy set can be adjusted by trial and error until the fuzzy set membership accords with the webmaster's 'feel' for which words are category-specific and which are not.

Thereafter, the frequency of use of different words in search queries is found from search engine query logs. Once again, this is used as a basis of a calculation (step 406) of the degree of membership of each word to the fuzzy sets 'extremely popular', 'very popular' and 'others'. Again, the limits of each fuzzy set can be adjusted by trial and error until the fuzzy set membership accords with the webmaster's 'feel' for which words are category-specific and which are not.

Fuzzy logic techniques are then used to find (step 408), for each category, the intersection of the sets 'category-specific' and 'very popular'. Those keywords are then added to a category record for each webmaster-identified category to build (step 410) the first three category records (all internal) in the site-specific index shown in Figure 2.

It will be understood that the above process could be carried out by each web-server computer in relation to each web-site. Where the webmaster wishes to include categories for which users are best to visit external web-sites, the webmaster enters the URL of the relevant category-heading page on the external web-site into the web-server when prompted (step 412) to do so. The ssi.txt file can then be requested in the same way as described in relation to the search engine server above, and the relevant category record(s) extracted and added (step 414) to the site-specific index.

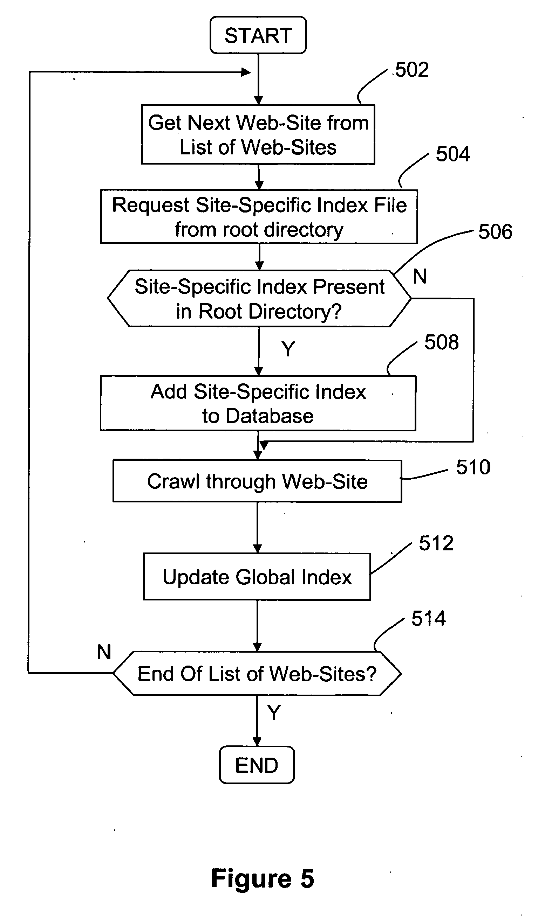

The index-building activities (Figure 5) of the search engine server begin with the server fetching (step 502) the URL of a home page of the next web-site in the list of web-sites in store 22 . Thereafter, the search engine server 12 seeks to retrieve (step 504) a site-specific index file from the directory containing the home page of the web-site. This is achieved in the present embodiment by the file having an agreed name and file extension - for example 'ssi.txt' and the server requesting that file using an Hypertext Transfer Protocol (HTTP) GET request.

If found, the data in the site-specific index file is added (step 508) to the database in the store 20 holding the site-specific indices, with a field being added to each of the category records which indicates the web-site from which the index was retrieved. Whether or not a site-specific index file is found, the index-building activities of the search engine server 12 continue with the search engine server 'crawling' (step 510) the web-site in a conventional manner and updating (512) its global index stored in store 18 in accordance with the web-pages it crawls. The index-building steps (502-512) are repeated for each web-site included in the list in store 22. Those skilled in the art will realise that the list of web-sites might be so large as to mean that index-building process needs to run continuously in order to keep the global index acceptably up-to-date.

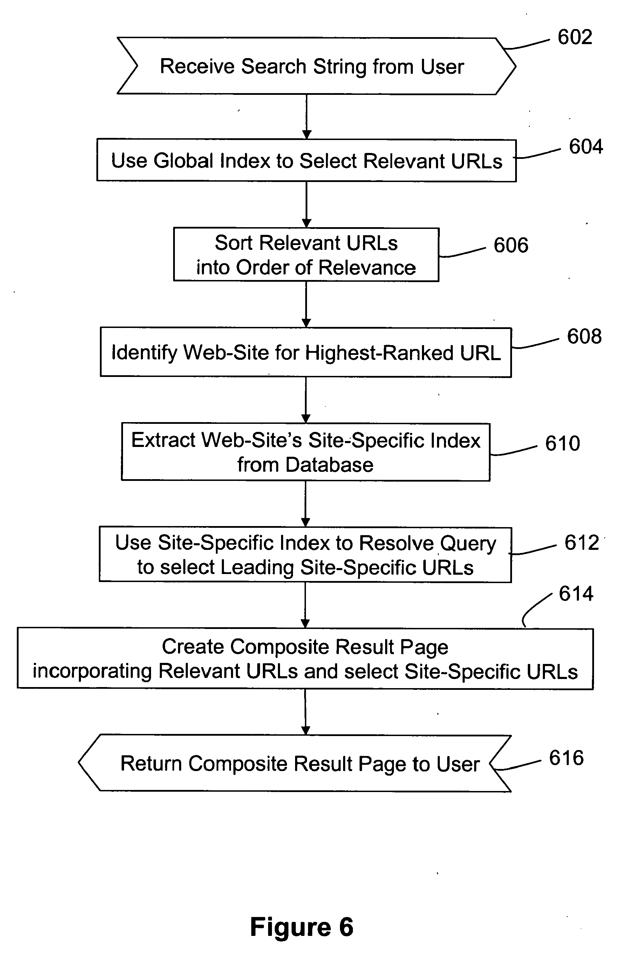

The search query handling process (Figure 6) of the search engine server 12 begins with the receipt (step 602) of the search string from the client PC 10. The query handling process is initially conventional, using (step 604) the full-text index in store 18 to find web-pages which contain the words included in the search string, and then sorting those web-pages in order of likely relevance to the user (step 606).

In contrast to conventional search engine query handling processes, in the present embodiment the search engine server 12 then proceeds to identify (step 608) the web-site which contains the most relevant web-page and retrieves the site-specific index from the database in store 20. In alternative embodiments, the site-specific index could instead be retrieved from the web server 14,15 at this stage. However, this is not preferred since the speed with which a user is provided with a search result by the search engine server 12 is considered very important.

A site-specific query handling process is then carried out (step 612) to identify the three most relevant categories for a user query, on the basis of any keywords present in both the user query and the site-specific index. In preferred embodiments, the three chosen categories are ranked in order of relevancy to the query.

To give an example, if the user types the query 'Freestyle 7250' and the global search engine identifies the page 'www.bt.com/textbundle' as the, most relevant page on the World-Wide Web, then the search engine computer will retrieve the category index associated with www.bt.com (i.e. the example of Figure 2) and find the keyword (product name #2 in this case) associated with the categories 'e-shop', 'self-service' and 'consumables'.

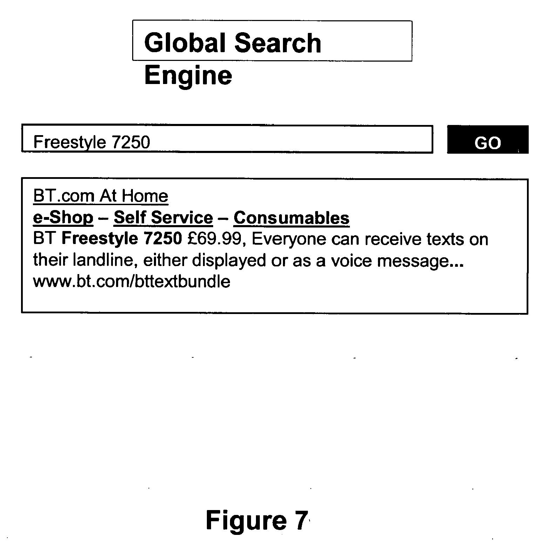

The search engine server 12 then creates (step 614) a web-page displaying an entry for each of the most relevant web-pages found by the global search query handling process (steps 604 - 608). The entry for each of the most relevant web-pages begins with a hyperlink 702 to the web-page (the hyperlink text usually being the title of the web-page), with a snippet 704 from the text of the web-page quoting that part of the text which most closely matches the query string received from the user below that (with any search terms highlighted 706), and the URL 708 of the web-page below the snippet 704. As seen in Figure 7, in addition to those conventional components, the entry for at least the most relevant web-page additionally has hyperlinks 710 to the leading pages relating to the categories identified as most relevant in the site-specific query handling process (Figure 6, step 612). Those hyperlinks are located directly under the web-page title and arranged in order of decreasing relevance (left-to-right) in this embodiment. The text of each of the hyperlinks is the name of the category taken from the site-specific index (Figure 2, lefthand column). Many other arrangements of the same components are of course possible without departing from the scope of the present invention.

The dynamically-created web-page is then returned to the user's PC 10 where the browser program running on that PC renders a page having an entry like that seen in Figure 7 on the display of the user's PC.

The search results presented to the user thus include hyperlinks to the category-leading web-pages which the webmaster (who likely has a better knowledge of the web-site) has indicated are probably most useful to the user. The user can then click on one of those hyperlinks and receive see the selected category-leading web-page in the browser of their PC.

It will be seen how having the search engine server 12 combine a conventional global query handling process with a site-specific query handling process, and presenting the results of both processes in one or more result entries on the web-page displayed in the user's browser, a technique which allows webmasters to present within the global search results a hyperlink to the "landing page" preferred by the webmaster in response to the query is provided. This provides a search engine service which allows the user to see a preferred "landing page" following just a single click on the search results page.

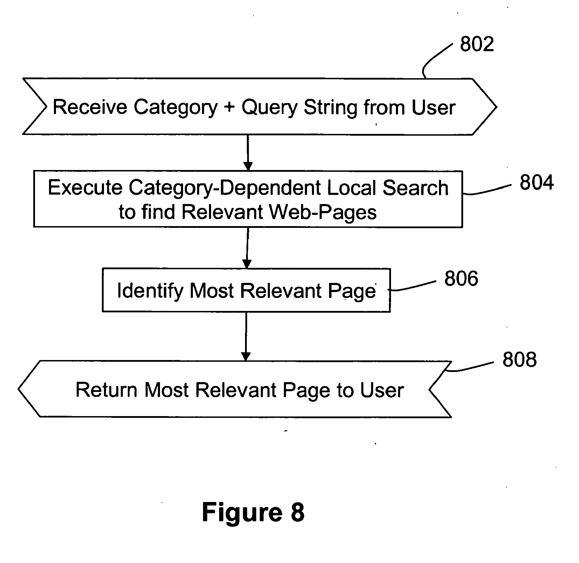

Further processing carried out by the web-site server 14 in a preferred embodiment of the present invention will now be described in relation to Figure 8. In this embodiment, instead of the hyperlink from the search results page just pointing to a URL to the preferred landing page, the hyperlink instead points to an active service page or the like and includes the category name associated with the web-page in the site-specific index, and the user's search string. Those skilled in the art will know how such information can be passed in an HTTP request to the web-site server 14.

On receiving the request (step 802), the web-site server 14 carries out (step 804) a category-dependent web-site search to find pages relevant to the user's query. The most relevant of those pages is then identified (step 806) and returned (step 808) to the user who sees the page displayed on the display of their PC.

In this way, the user might arrive directly at a relevant page by clicking on one or the supplementary links (e.g. 'e-shop') displayed on the search result page (Figure 7). Indeed, the user might be unaware that both a global and local search engine process have been used in order to return the relevant page.

Suitable category-specific search techniques are disclosed in Géry Ducatel, Zhan Cui, Ben Azvine (2006) Hybrid Ontology and Keyword Matching Indexing System, Proceedings of WWW06 conference, Edinburgh. Other category-specific search techniques will be known to those skilled in the art.

There are many different embodiments of the present invention. Possible modifications to the above embodiments include:
i) although described in relation to the World-Wide Web supported by the global Internet, those skilled in the art could adapt the above embodiment to work in document retrieval systems of a much smaller scale. For example, the invention could be applied to a corporate Intranet, or to a local area network connecting a client PC to a local file server. It might well be useful in searching for relevant e-mails in a typically burgeoning mailbox stored on an enterprise mail server. It will be realised that the documents need not be HTML or XHTML coded documents, they could be e-mail messages, word processor documents, or any other type of machine readable text;
ii) the scale of the permanent storage used by the search engine server can similarly take various forms - for a single server, the storage might take the form of a hard disk, or a Redundant Array of Inexpensive Disks, or a Storage Area Network, or a plurality of such things;
iii) in the above embodiment, the site-specific query handling process (step 612, Figure 6) identified the three most relevant categories to the query being handled. Of course, in other embodiments, only the most relevant category might be selected, or any reasonable number (two to six is preferred) of categories might be selected. In other embodiments, only categories whose relevancy is judged to exceed some threshold are selected;
iv) in the above embodiment, web-pages were associated with categories in the site-specific index. As a further refinement, parts of web-pages (for example paragraphs or frames) would also be associated with categories in the site-specific index.
v) in the above embodiment, related external web-pages were found by requesting the webmaster for the link providing web-site to enter links to external web-pages manually. In other embodiments, the site-specific index building process (Figure 4) might instead find deep links (i.e. links to external web-sites) in the web-pages of the web-site and pass one or more of the most frequently occurring to the process which then downloads the appropriate category records from the web server hosting the external web-site.
vi) in other embodiments, the keywords for inclusion in the external category records might be derived by downloading the external web-pages and external web server query log and carrying out a keyword selection similar to that used to identify keywords in steps 404 to 408 of Figure 4.

In summary, an electronic document retrieval system is disclosed. It has particular utility to World-Wide Web searching. In contrast to conventional search engines, when providing supplementary results in addition to primary results, the system enables the supplementary results to include links to documents in web-sites other than the web-site to which the primary result belongs. In this way, a user is able to find the page most relevant to his query more rapidly than has hitherto been possible.

## Claims

1. An electronic information retrieval system comprising:
a plurality of collection-hosting computers operable to provide information from respective stored collections of hyperlinked documents, a global search engine computer, a user's computer having a user input device and a display, said information retrieval system further comprising a network interconnecting said search engine computer, said one or more collection-hosting computers and said user's computer; each of said computers including software allowing data transfer between said computers;
said search engine computer is arranged in operation to:
i) obtain related link data from each of said plurality of host computers, wherein said related link data includes one or more external links to documents outside the collection hosted by said collection-hosting computers;
ii) receive a search query from said user's computer and to select one or more globally-selected documents found to be relevant to the query;
iii) identify the relevant document collection to which said globally-selected document belongs;
iv) identify one or more external documents outside the relevant collection in dependence on said related link data;
v) send to said user's computer a search result including a hyperlink to said globally-selected document along with one or more hyperlinks to said one or more relevant external documents; and
said user's computer is arranged in operation to:
i) allow said user to enter said search query using said input device to seek relevant documents from said plural collections of documents; and
ii) display said search result on the user's computer's display.

2. An electronic information retrieval system according to claim 1 wherein each of said plurality of collection-hosting computers is arranged in operation to assemble related link data including one or more external links to documents outside the collection hosted by said collection-hosting computers;

3. An electronic information retrieval system according to claim 1 or 2 wherein said related link data comprises a category index indicating associations between keywords and/or key phrases, and category-heading documents outside said collection, said search engine computer being further arranged in operation to identify one or more relevant external category-heading documents in dependence on words or phrases in said query and the category index associated with said collection.

4. An electronic information retrieval system according to claim 3 wherein said category index further indicates associations between keywords and/or key phrases, and category-heading documents within said collection, said search engine computer being further arranged in operation to also identify one or more relevant internal category-heading documents in dependence on words or phrases in said query and the category index associated with said collection.

5. An electronic information retrieval system according to any preceding claim wherein said documents comprise World-Wide Web pages, and said collections comprise web-sites.

6. An electronic information retrieval system according to any preceding claim wherein said collections of documents are organised in a hierarchy, and said category-heading pages comprise section-heading pages which, in the hierarchy, are above other pages within the section.

7. A electronic information retrieval system according to any one of claims 3 to 6 wherein each of said plurality of collection-hosting computers is further arranged in operation to select keywords for inclusion in said category index in dependence upon the specificity of keywords to the category headed by said category-heading documents in said collection.

8. An electronic information retrieval system according to claim 7 wherein each of said plurality of collection-hosting computers is further arranged in operation to select keywords for inclusion in said category index in dependence the popularity of use of the keyword in user queries.

9. An electronic information retrieval system according to any one of claims 3 to 6 wherein:
each collection-hosting computer stores said category index data and document categorisation data which associates one or more documents in the collection with category-heading pages within the collection;
said search engine computer is further arranged in operation to:
vi) respond to the user clicking on one of said category-heading document links in said search result page by forwarding to the relevant collection-hosting computer a categorised search query comprising an indication of which category-heading page link was selected by the user and the user's original search query;
said collection-hosting computer being further arranged in operation to receive said categorised search query from said search engine computer and to select a local document accordingly, and to return the selected local document to the user.

10. An electronic information retrieval system according to claim 9 wherein said document categorisation data further indicates the strength of the local document to local category-heading page associations, said relevant collection-hosting computer being further arranged in operation to take said categorisation strength data into account when selecting a local document for return to the user.

11. An electronic information retrieval system according to any one of claims 5 to 10 wherein said search engine computer is further arranged in operation to create a global index which associates keywords with documents, to receive search queries from said user's computer; and to use said global index to select web-pages which are relevant to each received search query.
